## Europäisches Patentamt

(19) **European Patent Office**

**Office européen des brevets**

(11) Veröffentlichungsnummer: **0 302 310 B1**

(12) **EUROPÄISCHE PATENTSCHRIFT**

(45) Veröffentlichungstag der Patentschrift:
29.08.90

(51) Int. Cl.⁵: **C10B 53/00**, F23G 5/027

(21) Anmeldenummer: **88111723.8**

(22) Anmeldetag: **20.07.88**

(54) Verfahren und Anlage zur thermischen Abfallentsorgung.

(30) Priorität: **03.08.87 DE 3725704**
**08.04.88 DE 3811820**

(43) Veröffentlichungstag der Anmeldung:
**08.02.89 Patentblatt 89/6**

(45) Bekanntmachung des Hinweises auf die Patenterteilung:
**29.08.90 Patentblatt 90/35**

(84) Benannte Vertragsstaaten:
**AT BE CH DE ES FR GB GR IT LI LU NL SE**

(56) Entgegenhaltungen:
**EP-A- 0 022 214**
**DE-A- 2 432 504**
**DE-A- 3 400 976**
**GB-A- 1 562 492**

(73) Patentinhaber: **Siemens Aktiengesellschaft,**
**Wittelsbacherplatz 2, D-8000 München 2(DE)**

(72) Erfinder: **Tratz, Herbert, Dr., Scheerstrasse 3,**
**D-8561 Ottensoos(DE)**
Erfinder: **Riedle, Klaus, Prof. Dr., Ringstrasse 36D,**
**D-8525 Uttenreuth(DE)**
Erfinder: **Lösel, Georg, Dipl.-Ing., Kirchenweg 3,**
**D-8525 Uttenreuth(DE)**

## Beschreibung

Die Erfindung bezieht sich auf ein Verfahren und eine Anlage zur thermischen Abfallentsorgung. Die Anlage ist ausgerüstet mit einem Pyrolysereaktor, der den Abfall in Schwelgas und festen Pyrolysereststoff umformt, mit einer am Pyrolysereaktor angeschlossenen Austragsvorrichtung, die das Schwelgas und den Feinstaub vom gröberen Pyrolysereststoff trennt, und mit einer Brennkammer, der das Schwelgas und der Feinstaub zugeleitet sind.

Eine solche Anlage zur thermischen Abfallentsorgung ist unter anderem durch die DE-A 2 432 504 bekannt. Bei dieser Anlage wird der Abfall (z.B. Hausmüll) bei einer Temperatur zwischen 300 und 600°C unter Luftabschluß verschwelt, und das dabei erhaltene Schwelgas wird kontinuierlich durch ein glutheißes Koksbett geleitet, das aus dem anfallenden Schwelkoks und zugeleiteter vorgewärmter Frischluft gebildet ist. Im Koksbett wird das Schwelgas zu hochenergetischem Brenngas umgewandelt. Bei diesem Prozeß wird nur soviel Sauerstoff zugegeben, wie nötig ist, um die Temperatur im Koksbett zu halten. Dem Koksbett wird nicht nur der im Schwelprozeß anfallende Schwelkoks zugeführt, sondern gegebenenfalls auch ein hochwertiger Kohlenstoffträger, wie z.B. Braunkohlen-Schwelkoks oder Holzkohle. Das gewonnene Brenngas enthält wegen der beim Durchströmen durch das glutheiße Koksbett erfolgenden Aufspaltung der längeren Molekülketten so gut wie keine Schadstoffe. Es kann in einem Wärmetauscher abgekühlt und anschließend in einer Gasreinigungsanlage gereinigt werden; es läßt sich dann zu Heizzwecken oder zum Betrieb von Verbrennungskraftmaschinen verwenden. Es ist eine Eigenart einer solchen Anlage zur thermischen Abfallentsorgung, daß sie meist nicht in unmittelbarer Nähe eines Abnehmers für das Brenngas liegt. Daher kommen zu den Anlagekosten noch die Kosten für die Erstellung eines umfangreichen Gasrohr-Leitungsnetzes zu den einzelnen Verbrauchern hinzu. Wichtiger aber ist, daß der feste Pyrolysereststoff auf einer Deponie abgelagert wird. Hier ist zu befürchten, daß im Reststoff enthaltene Schadstoffe wie Schwermetallverbindungen im Laufe der Zeit ausgewaschen oder ausgelaugt werden und ins Grundwasser oder in Wasserläufe eindringen. Außerdem geht die im Reststoff enthaltene thermische Energie ungenutzt verloren.

Um bezüglich des letztgenannten Nachteils Abhilfe zu schaffen, ist nach der britischen Patentschrift GB-A 1 562 492 vorgesehen, den Pyrolysereststoff nach dem Zermahlen durch ein Sieb in einen gröberen Grobanteil (anorganische Stoffe wie Metalle, Keramik, Glas) und einen feineren Grobanteil (hoher Anteil kohlenstoffhaltiger Komponenten) zu trennen. Aus dem gröberen Grobanteil werden die Metalle abgeschieden. Der feinere Grobanteil wird zusammen mit Kohle in weiter zerkleinerter Form in einer Brennkammer verbrannt und auf diese Weise thermisch genutzt. Der Brennkammer wird auch das bei der Pyrolyse entstehende Schwelgas, aus dem in einem Kondensator zunächst Öle und Teere mit hohem Siedepunkt entfernt wurden, zugeleitet. Anzumerken ist hier, daß die Brennkammer in der bekannten Anlage der Feuerraum einer herkömmlichen Verbrennungsanlage für Kohle ist, und daß die Brennkammer Teil eines Dampferzeugers ist. Wegen der in einer solchen Anlage üblichen Kühlung der Brennkammerwände ist zu befürchten, daß Schadstoffe sowohl aus der Verbrennung des Pyrolysegases als auch aus der Verbrennung des Pyrolysereststoffes die verwendete Verbrennungsanlage zumindest teilweise passieren können und an die Umgebung (Luft, Sonderdeponien, Erde, Wasser) abgegeben werden. Das gilt beispielsweise für organische Schadstoffe, aber auch für Schwermetalloxide wie Cadmium-, Zink-, Quecksilber- und Thalliumoxid. Über die Verwendung der Brennkammer-Reststoffe ist nichts ausgesagt.

Ziel einer jeden Abfallentsorgung muß es sein, die Umweltbelastung mit Schadstoffen, welcher Art auch immer, möglichst gering zu halten.

Der Erfindung liegt die Aufgabe zugrunde, eine Anlage zur thermischen Abfallentsorgung der eingangs genannten Art so zu gestalten, daß die organischen und anorganischen Schadstoffe weitgehend beseitigt werden und möglichst wenig nicht weiter verwertbare Reststoffe, die zu deponieren sind, entstehen. Auch sollen der Investitionsaufwand möglichst klein und der Gesamtwirkungsgrad der Anlage möglichst groß sein. Weiterhin soll ein kostengünstiges Verfahren zur Abfallentsorgung angegeben werden.

Diese Aufgabe wird erfindungsgemäß dadurch gelöst, daß an der Austragsvorrichtung pyrolysereststoffseitig eine Reststofftrennvorrichtung zur Trennung der Großanteile, das sind die gröberen Grobanteile, die im wesentlichen nicht-brennbare Bestandteile wie Steine, Glasscherben, Porzellanreste, Metallteile umfassen, von Kleinanteilen, die die feineren brennbaren Grobanteile und die gegebenenfalls Feinanteile enthalten, angeordnet ist, daß eine Transporteinrichtung für die feineren Grobanteile zu einer Mahlvorrichtung führt, aus deren Austragsseite die gemahlenen feineren Grobanteile in einer mit Sauerstoffüberschuß betriebenen Brennkammer zuführbar sind, die die aus dem zugeführten Brennstoff erzeugten Verbrennungsgase ausreichend lange auf einem Temperaturniveau hält, so daß schmelzflüssige Schlacke entsteht, daß die Brennkammer mit einem Abzug versehen ist, aus dem die schmelzflüssige Schlacke entnehmbar ist, die nach Abkühlung in verglaster Form vorliegt, und daß in die von der Brennkammer zu einem Kamin führende Rauchgasleitung insbesondere eine Abhitzedampferzeugeranlage, eine Staubfilteranlage und eine Rauchgasreinigungsanlage eingebaut sind.

Das Verfahren zur Abfallentsorgung zeichnet sich erfindungsgemäß dadurch aus, daß es die folgenden Schritte umfaßt:

a) der Abfall wird bei relativ niedriger Temperatur weitgehend unter Sauerstoffabschluß verschwelt, wobei sich ein Schwelgas und ein Pyrolysereststoff bilden,

b) der Pyrolysereststoff wird getrennt in einen Feinanteil, einen feineren Grobanteil und einen gröberen Grobanteil,

c) der Feinanteil wird verbrannt, der feinere Grobanteil wird nach Zerkleinerung – vorzugsweise zusammen mit dem Schwelgas – verbrannt, wobei sich Rauchgas und eine schmelzflüssige Schlacke bilden, und der gröbere Grobanteil wird abgeschieden.

Weitere vorteilhafte Ausgestaltungen der Erfindung sind den Unteransprüchen zu entnehmen.

Die an die Austragsvorrichtung des Pyrolysereaktors angeschlossene Reststofftrennvorrichtung bewirkt eine Aufteilung oder speziell Siebung in einen gröberen Grobanteil, beispielsweise größer als 5 mm, und einen feineren Grobanteil, beispielsweise kleiner als 5 mm Korngröße. Ein Teil der im Pyrolysereaktor anfallenden Feinanteile (vorwiegend Feinstaub) wird mit dem Schwelgas zusammen direkt auf die Brennkammer gegeben. Ein anderer Teil dieser Feinanteile (= Feinstaub) wird durch die Reststofftrennvorrichtung den feineren Grobanteilen zugeschlagen. Durch die Aufteilung (Siebung) wird zugleich eine Trennung der nicht-brennbaren Bestandteile (wie Steine, Glasscherben, Porzellanreste, Metallteile) von den brennbaren Bestandteilen (Schwelkoks aus z.B. Holz, Kunststoffteilen, Faserstoffen) vorgenommen. Diese an den Schwelprozeß im Pyrolysereaktor anschließende Trennung der nicht-brennbaren Stoffe von den noch weiter zu verbrennenden Stoffen bildet die Voraussetzung dafür, daß die letzteren ohne allzu große Emissionsprobleme weiterverbrannt werden können. Zugleich wird so erreicht, daß die aus dem Pyrolysereaktor ausgetragenen Metalle weiterhin in nichtoxidierter Form, d.h. gut weiterverwertbar bleiben. Schließlich wird durch das Vermahlen der brennbaren feineren Grobanteile des Pyrolysereststoffes und das Verbrennen derselben (vorzugsweise zusammen mit den Feinanteilen des Pyrolysereststoffes) zusätzliche Wärme erzeugt, die in der Anlage selbst über einen Abhitzedampferzeuger in Dampfenergie und dann in elektrische Energie umgewandelt wird; ein besonderes Gasrohr-Leitungsnetz ist für diese Form der Ausnutzung der anfallenden Wärmeenergie nicht erforderlich.

In zweckmäßiger Ausgestaltung der Erfindung können in der Reststofftrennvorrichtung zunächst die Feinanteile und anschließend der leichteren Grobanteile durch Wegblasen von den schwereren Grobanteilen abgetrennt werden (Windsichtung). Dabei bleiben die schwereren Grobanteile liegen; sie können so separat ausgeschieden werden. Diese Art der Trennung ist zuverlässig und trotzdem mit nicht zu großem Aufwand durchzuführen. Zum Wegblasen benutzt man zweckmäßigerweise im Druck erhöhtes Rauchgas aus der Rauchgasleitung. Eine Siebung allein oder kombiniert mit einer Windsichtung ist auch möglich.

Die die schmelzflüssige Schlacke abgebende Brennkammer ist eine Schmelzkammer, z.B. konventioneller Bauart. Ihr werden die gemahlenen feineren Grobanteile über eine Leitung oder eine andere Transportvorrichtung zugeführt.

In vorteilhafter Weiterbildung der Erfindung kann die die schmelzflüssige Schlacke abgebende Brennkammer als Hochtemperatur-Brennkammer, d.h. für eine Wandtemperatur über 1200°, ausgelegt sein und auch bei dieser Temperatur betrieben werden. Bei dieser hohen Temperatur zerfallen alle organischen Schadstoffe, und auch eingebrachte Asche (die im Pyrolysereststoff enthalten ist) fällt zum größten Teil im schmelzflüssigen Zustand an und kann abgezogen werden. Der Hochtemperatur-Brennkammer werden bevorzugt neben den gemahlenen feineren Grobanteilen auch das Schwelgas zugeführt. Die Schwelgas-Brennkammer und die Pyrolysereststoff-Brennkammer können aber auch verschiedene Brennkammern sein. Beide können als Schmelzkammern ausgebildet sein. Die noch im Rauchgas enthaltenen Schadgase können in einer marktgängigen Rauchgasreinigungsanlage abgeschieden werden.

Die beschriebene Anlage und das beschriebene Verfahren zeichnen sich durch ihre enormen Verwertungsmöglichkeiten für den Abfall in stofflicher und energetischer Hinsicht aus. Bei geringer Restemission ergibt sich eine umweltfreundliche Aufbereitung des Abfalls. Halogenierte Kohlenwasserstoffe, wie Dioxine und Furane, die im Schwelgas enthalten sind, werden unschädlich gemacht. Der feste Pyrolysereststoff ist, wie Untersuchungen gezeigt haben, weitgehend dioxinfrei; er enthält aber Schwermetalle wie Cadmium und Quecksilber, die in herkömmlicher Weise nicht unschädlich deponierbar sind. Organische Schadstoffe, die im Pyrolysereststoff vorhanden sind, werden verbrannt und somit vernichtet. Die unbrennbaren Bestandteile des Pyrolysereststoffs werden z.T. in grober Form abgeschieden und können u.U. weiterverwendet werden; z.T. werden sie in schmelzflüssige Schlacke umgewandelt. Die Schlacke liegt nach Abkühlung in verglaster Form vor. Die im Glas enthaltenen Stoffe, z.B. Schwermetalle, sind sicher eingeschlossen; sie sind z.B. nicht auslaugbar. Als weiterer Vorteil ist auf die Entstehung nur geringer Abgasmengen und die gute thermische Ausnutzung des angelieferten Abfalls hinzuweisen.

Mit dem Begriff "Abfall" sind vorliegend Abfallstoffe gemeint, die in Industrie und Haushalt anfallen, also z.B. Hausmüll, aber auch Schlacke aus einer konventionellen Müllverbrennungsanlage. Nicht unter diesen Begriff fällt z.B. Bauschutt, obwohl letzterer natürlich auch unter die aufgegebenen Substanzen gemischt sein kann. Der Begriff "Pyrolyse" umfaßt die thermische Zersetzung vor allem organischer Substanzen bei höheren Temperaturen, z.B. 300 – 900°C, wobei große Moleküle zu kleinen, oft gasförmigen Molekülen abgebaut werden. Die Pyrolyse wird häufig unter Sauerstoffmangel vorgenommen.

Weitere Ausgestaltungen der Erfindung werden anhand von in Figuren dargestellten Ausführungsbeispielen näher erläutert. Für gleiche Elemente werden dieselben Bezugszeichen verwendet.

Es zeigen:

Fig. 1 eine schematische Darstellung einer erfindungsgemäßen Anlage zur thermischen Abfallentsorgung;

Fig. 2 eine weitere Anlage mit mehr technischen Details.

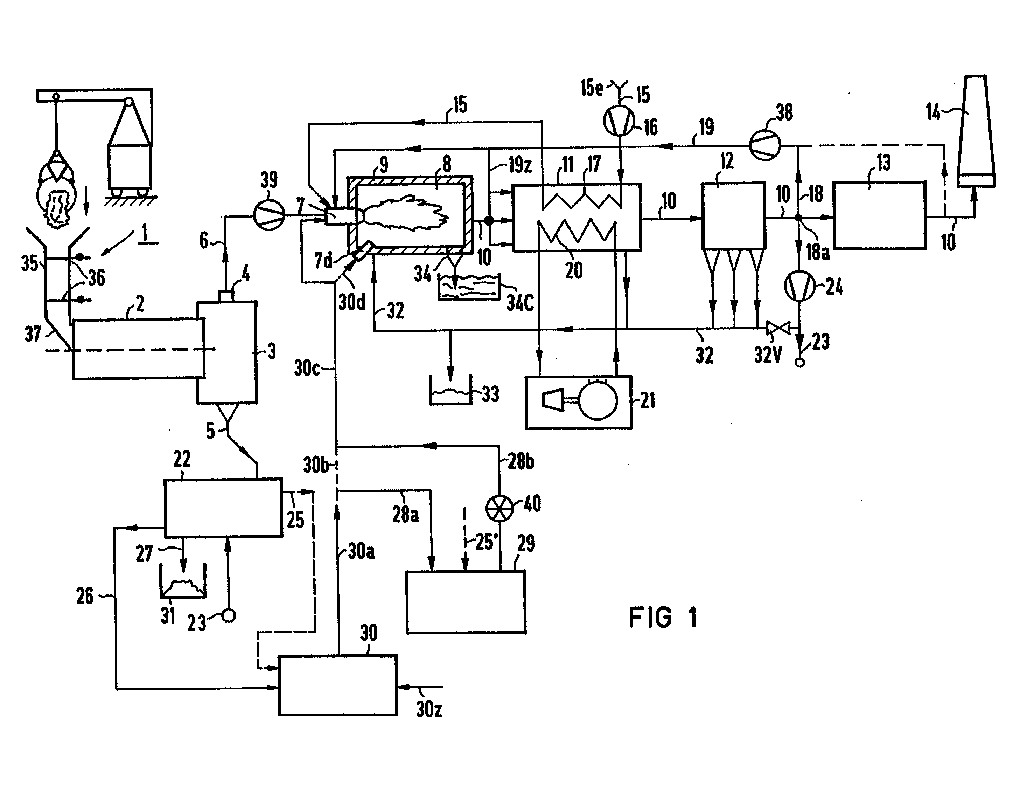

In Fig. 1 erkennt man den Aufbau und das Zusammenwirken der einzelnen Bausteine einer Anlage zur thermischen Abfallentsorgung. Mit 1 ist allgemein eine Zufuhr- oder Aufgabeeinrichtung für die Zufuhr von festem Abfall in einen Pyrolysereaktor 2 bezeichnet. Der Pyrolysereaktor 2 ist im Ausführungsbeispiel eine konventionelle Pyrolysetrommel, die bei 300 bis 600°C arbeitet, weitgehend unter Sauerstoffabschluß betrieben wird und neben flüchtigem Schwelgas einen weitgehend festen Pyrolysereststoff erzeugt. Der Pyrolysetrommel 2 ist ausgangs- oder austragsseitig eine Austragsvorrichtung 3 nachgeschaltet, die mit einem Schwelgasabzugsstutzen 4 für den Abgang des Schwelgases und mit einem Pyrolysereststoffausgang 5 für die Abgabe des festen Pyrolysereststoffes versehen ist. Eine an den Schwelgasabzugsstutzen 4 der Austragsvorrichtung 3 angeschlossene Schwelgasleitung 6 ist mit dem Brenner 7 einer Hochtemperatur-Brennkammer 8 verbunden.

Die Hochtemperatur-Brennkammer 8 ist für eine Temperatur über 1200°C ausgelegt. Sie ist über eine bestimmte Länge ungekühlt. So ist sichergestellt, daß die Verweilzeit der eingeleiteten Gase im Temperaturbereich über 1200°C (auch an den Wänden) ausreichend groß ist, um eine thermische Zerstörung der organischen Schadstoffe zu bewirken. Die Verweilzeit beträgt etwa 1 bis 5 sec nach dem Ausbrand der Flamme, deren Länge z.B. 7 m betragen kann. Die Brennkammer 8 ist mit einer Wärmeisolierung oder Wäremdämmung 9 versehen. An einer die Hochtemperatur-Brennkammer 8 verlassenden Rauchgasleitung 10 sind in Serie hintereinander – in der angegebenen Reihenfolge – eine Abhitzedampferzeugeranlage 11, eine Staubfilteranlage 12, eine Rauchgasreinigungsanlage 13 und ein Kamin 14 angeschlossen. Der Brenner 7 der Hochtemperatur-Brennkammer 8 wird mit angewärmter Frischluft von einer Frischluftleitung 15 versorgt, die über einen Luftverdichter 16 aus einem Lufteinlaß 15e mit Frischluft gespeist wird. Diese Frischluftleitung 15 führt vom Luftverdichter 16 durch einen in der Abhitzedampferzeugeranlage 11 angeordneten Frischluft-/Rauchgas-Wärmetauscher 17 und/oder über einen (nicht gezeigten) Dampfluftvorwärmer zum Brenner 7.

Wie Fig. 1 zeigt, ist hinter der Staubfilteranlage 12 an einem Anschlußpunkt 18a ein Abzweig 18 an der Rauchgasleitung 10 vorgesehen, an den eine Rauchgasrezirkulationsleitung 19 angeschlossen ist. Über diese Leitung 19 kann Rauchgas, das bereits abgekühlt und entstaubt ist, zur Temperatursteuerung oder -regelung dem Brenner 7 der Hochtemperatur-Brennkammer 8 zugeführt werden. Alternativ oder zusätzlich kann es auch in deren Flamme eingeblasen werden. Des weiteren kann - zusätzlich oder alternativ - das bereits abgekühlte und entstaubte Rauchgas aus der Rauchgasrezirkulationsleitung 19 zur Temperaturabsenkung dem Rauchgas, das der Abhitzedampferzeugeranlage 11 von der Hochtemperatur-Brennkammer 8 zuströmt, über eine Leitung 19z und über (nicht gezeigte) Düsen beigemischt werden. In Fig. 1 ist auch diese vorteilhafte Eindüsung des kühleren Rauchgases längs der Wände der Abhitzedampferzeugeranlage 11 dargestellt. Bevorzugt ist ein konstantes Einblasen längs der Innenwand. Auch hier ist eine Temperatursteuerung oder -regelung möglich. Es ist auch möglich, Rauchgas aus der Rezirkulationsleitung 19 einem separaten, hier nicht dargestellten Wärmetauscher für die Aufheizung der Frischluft zuzuführen. In der Abhitzedampferzeugeranlage 11 sind Heizflächen 20 angeordnet, die mit einem hier nur schematisch angedeuteten Dampfkraftwerk 21 in Verbindung stehen und dieses mit Wasserdampf speisen. Das beigestellte Dampfkraftwerk 21 ist zur Stromerzeugung vorgesehen. Stattdessen kann auch eine Fernwärmeleitung vorgesehen sein.

Die Pyrolysereststoffleitung am Pyrolysereststoffausgang 5 der Austragsvorrichtung 3 führt zu einer Reststofftrennvorrichtung 22. In dieser Reststofftrennvorrichtung 22, die als Sieb ausgebildet sein kann, wird der abgezogene Pyrolysereststoff in einen Feinanteil (gebildet aus Feinstäuben), in einen feineren Grobanteil und in einen gröberen Grobanteil aufgeteilt. Der Feinanteil umfaßt im wesentlichen brennbare Feinstäube. Der feinere Grobanteil umfaßt im wesentlichen die brennbaren Bestandteile des Grobanteils des Pyrolysereststoffs. Und der gröbere Grobanteil umfaßt im wesentlichen nicht-brennbare Bestandteile wie Steine, Glasscherben, Porzellanreste und Metallteile.

Die Reststofftrennvorrichtung 22 ist zwecks Zufuhr von «Inertgas» an eine Inertgaszuführungsleitung 23 angeschlossen, in die ein Druckerhöhungsverdichter 24 eingeschaltet ist. Unter «Inertgas» wird hier ein nicht zur Entflammung führendes Gas, z.B. Stickstoff, ein sauerstoffarmes oder -freies Mischgas oder gar ein ebensolches Rauchgas verstanden. Die Inertgaszuführungsleitung 23 ist im Ausführungsbeispiel ihrerseits am Anschlußpunkt 18a an der Rauchgasleitung 10 hinter der Staubfilteranlage 12 angeschlossen. Die Reststofftrennvorrichtung 22 besitzt drei abführende Leitungen, und zwar eine Feinanteilleitung 25 für den Feinanteil (Feinstäube), eine Transporteinrichtung oder Leitung 26 für den feineren Grobanteil, z.B. mit einem Durchmesser von weniger als 5 mm, und eine Leitung 27 für den gröberen Grobanteil, z.B. mit einem Durchmesser von mehr als 5 mm. Die Feinanteilleitung 25 führt – ebenso wie die Leitung 26 für den feineren Grobanteil – über eine Mühle oder Mahlvorrichtung 30 und eine Transportvorrichtung, hier drei Leitungen 30a, 30b und 30c, zum Brenner 7 der Hochtemperatur-Brennkammer 8. Die (gestrichelte) Leitung 30b kann unterbrochen werden, so daß die Leitung 30a an einen Leitungszweig 28a angeschlossen ist, der in einen Zwischenbunker (Zwischenlager) 29 für die Feinanteile und für die gemahlenen feineren Grobanteile führt. Letzterer ist über einen Leitungszweig 28b mit der Leitung 30c verbunden. Dabei liegt in der Leitung 28b eine Dosiereinrichtung 40, z.B. ein gesteuertes Transportmittel, um die Temperatur oder Heizleistung der Brennkammer 8 zu regeln. Die Leitung 30c führt hier direkt in den kombinierten Gas-Staub-Brenner 7. Stattdessen kann sie als (gestrichelt eingezeichnete) Leitung 30d zu einem separaten Staubbrenner 7d führen.

Je nach Sichtungsgüte in der Reststofftrennvorrichtung 22 kann der Feinstaub in Leitung 25 unter Umgehung der Mahlvorrichtung 30 direkt in den Zwischenbunker 29 gefördert werden. Dies ist durch einen gestrichelten Pfeil 25′ angedeutet.

Die Leitung 27 für die spezifisch schweren, gröberen Grobanteile führt in einen Container 31. In diesem sammeln sich vorwiegend Steine, Glas, Keramik, aber auch Metallteile. Diese Stoffe können einer Wiederverwendung zugeführt werden. Die Leitung 27 kann auch zu einer Metallabscheidevorrichtung (nicht gezeigt) führen, in der die Metallstücke von den Steinen sowie von Glas- und Keramikstücken getrennt werden. Letztere können entweder aufgemahlen oder einer Deponie zugeführt werden. Falls brennbare Stoffe vorhanden sind, wird der gemahlene Reststoff von der Mühle 30 entweder direkt zum Brenner 7 oder zum Zwischenbunker 29 gefördert.

Die in der Staubfilteranlage 12 und gegebenenfalls auch in der Abhitzedampferzeugeranlage 11 anfallende Flugasche (Staub) kann über eine Ascherückführleitung 32 in die Hochtemperatur-Brennkammer 8 eingeblasen werden. Zum Einblasen ist die Ascherückführleitung 32 über ein Ventil 32V an die Inertgaszuführungsleitung 23 oder – wie nicht gezeigt – direkt an die Rauchgasleitung 10 am Ausgang der Staubfilteranlage 12 angeschlossen. Bedarfsweise kann die Flugasche auch in einen Container 33 geblasen werden. Auf diese Weise wird mit Metall angereicherte Asche dem Kreislauf entnommen. Die Flugstaubrückführung in die Brennkammer 8 kann auch mit (nicht gezeigten) mechanischen Transporteinrichtungen erfolgen.

Die Hochtemperatur-Brennkammer 8 ist mit einem Schlackeabzug 34 versehen. Über diesen wird die schmelzflüssige Schlacke in einen Wasserbehälter 34C geleitet. Hier erstarrt sie zu einem glasartigen Granulat.

Es ist ein Vorteil dieser Anlage zur thermischen Abfallentsorgung, daß die sonst bei Pyrolyseanlagen erforderliche, sehr energieaufwendige und hohe Investitionen erfordernde Vorzerkleinerung des Abfalls über Schredderanlagen zwar möglich, aber nicht unbedingt notwendig ist. Bei der vorliegenden Anlage kann also der nicht-geschredderte Abfall in der Aufgabeeinrichtung 1 über einen Fallschacht 35 mit Doppelschleuse 36 und Rutsche 37 in die Pyrolysetrommel 2 eingebracht werden. Beim Erhitzen in der Pyrolysetrommel 2 wird der Abfall bei 300 bis 600°C teilweise vergast. Das dabei entstehende Schwelgas und ein Teil des entstehenden Feinstaubs wird über den Austrags- oder Schwelgasabzugsstutzen 4 der Austragsvorrichtung 3 und die Schwelgasleitung 6 in den Brenner 7 der Hochtemperatur-Brennkammer 8 geleitet. Dort verbrennt das Schwelgas, das organische Schadstoffe enthält, zusammen mit der vom Luftverdichter 16 über die Frischluftleitung 15 und den Frischluft-Rauchgas-Wärmetauscher 17 zugeführten aufgeheizten Frischluft, also unter Sauerstoff-oder Luftüberschuß. Dabei wird die Wandtemperatur in der Hochtemperatur-Brennkammer 8 auf über 1200°C gehalten. Bei dieser hohen Temperatur zerfallen alle längeren Molekülketten, also auch die organischen Schadstoffe. Um die Gase ausreichend lange und stabil auf diesem Wandtemperaturniveau von über 1200°C zu halten, ist die Hochtemperatur-Brennkammer 8 im Ausführungsbeispiel verhältnismäßig voluminös gebaut und über eine gewisse Länge ungekühlt. Die Regelung der Wandtemperatur auf einen vorgegebenen Sollwert über 1200°C erfolgt mittels eines (nicht gezeigten) Reglers z.B. durch mehr oder minder starkes Einblasen von abgekühltem Rauchgas, das hinter der Abhitzedampferzeugeranlage 11, im gezeigten Ausführungsbeispiel sogar hinter der Staubfilteranlage 12, abgezweigt und über die Rauchgasrezirkulationsleitung 19 dem Brenner 7 zugeführt wird. Zur Veränderung des Einblasedurchsatzes ist ein Gasverdichter 38 in die Rauchgasrezirkulationsleitung 19 eingebaut.

Wie bereits ausgeführt, kann das abgekühlte Rauchgas direkt in den Brenner 7 der Hochtemperatur-Brennkammer 8 eingeleitet werden, um so die Brennkammer- oder Flammtemperatur zu beeinflussen. Es kann aber auch neben der Flamme eingeblasen werden. Der in der Rauchgasleitung 10 liegenden Abhitzedampferzeugeranlage 11 kann zur Temperaturbegrenzung ebenfalls abgekühltes Rauchgas aus der Rauchgasrezirkulationsleitung 19 zugeführt werden, und zwar über die Leitung 19z. Hier kann das abgekühlte Rauchgas entweder direkt in die Rauchgasleitung 10 eingeleitet und/oder – wie zeichnerisch durch die beiden wandnahen Einlässe angedeutet – als Schleier längs der Innenwände der Abhitzedampferzeugeranlage 11 eingeblasen werden. Auf diese Weise wird deren Verschmutzung gering gehalten. In der Abhitzedampferzeugeranlage 11 wird in den Heizflächen 20 Hochdruck-Wasserdampf erzeugt, der zur Speisung des integrierten Dampfkraftwerkes 21 oder in hier nicht weiter dargestellter Weise als Prozeßdampf für interne und/oder externe Verbraucher verwendet werden kann. In dem in der Abhitzedampferzeugeranlage 11 eingebauten Frischluft-Rauchgas-Wärmetauscher 17 wird die vom Lufteinlaß 15e angesaugte Frischluft aufgeheizt.

In der Rauchgasrezirkulationsleitung 19, in der Frischluftleitung 15 und in der Schwelgasleitung 6 eingebaute Gasverdichter 38, 16 bzw. 39 werden zur Gasförderung eingesetzt. Der in der Schwelgasleitung 6 eingebaute Gasverdichter 39 dient darüber hinaus zur Aufrechterhaltung eines – wenn auch geringen – Unterdruckes in der Pyrolysetrommel 2. Durch diesen Unterdruck wird verhindert, daß Schwelgase durch die Ringdichtungen der Pyrolysetrommel 2 nach außen in die Umgebung austreten.

Stattdessen – und bevorzugt – kann der Gasverdichter 39 direkt am Ausgang der Rauchgasreinigungsanlage 13 als Saugzuggebläse angeordnet sein. Das hat den Vorteil, daß die im Schwelgas am Stutzen 4 enthaltenen Feinstäube praktisch in vollem Umfang direkt in die Brennkammer 8 gegeben werden können.

Der mittels der Austragsvorrichtung 3 aus der Pyrolysetrommel 2 abgezogene feste Pyrolysereststoff wird in der Reststofftrennvorrichtung 22 in den Feinanteil, in den feinen Grobanteil und in den gröberen Grobanteil aufgeteilt. Zu dieser Abtrennung könnte die Reststofftrennvorrichtung 22 auch mit einem Transportband ausgerüstet sein, auf das der Pyrolysereststoff fällt. Von diesem Transportband könnten zuerst die Feinanteile mit dem «Inertgas», im vorliegenden Fall mit dem abgekühlten und im Druckerhöhungsverdichter 24 komprimierten Rauchgas, abgeblasen und in die Feinanteilleitung 25 hineingeblasen werden. Anschließend könnten in einem weiteren Abschnitt des Transportbandes auf die gleiche Weise die im spezifischen Gewicht leichteren Grobanteile von den auf dem Transportband liegenbleibenden schwereren Grobanteilen abgetrennt und in die Leitung 26 transportiert werden. Über diese gelangen sie in die Mahlvorrichtung 30. Die spezifisch schwereren Grobanteile würden dann vom Ende des Transportbandes in die Leitung 27 fallen, von wo sie in den Container 31 rutschen.

Die Rückführung der in der Staubfilteranlage 12 und Abhitzedampferzeugeranlage 11 abgezogenen Flugasche in die Hochtemperatur-Brennkammer 8 mittels der Ascherückführleitung 32 führt dazu, daß die Flugasche dort aufgeschmolzen und in der Schlacke der Hochtemperatur-Brennkammer 8 eingebunden wird. Diese Schlacke wird am Schlackenabzug 34 am unteren Ende der Hochtemperatur-Brennkammer 8 abgezogen und im Container, z.B. im Wasserbad in einem Wasserbehälter 34c eines Naßentschlackers, abgeschreckt. Es entsteht im Wasserbad ein relativ grobkörniges Granulat, das für den Straßenbau und ähnliche Verwendungszwecke einsetzbar ist.

Durch die Abtrennung der gröberen Grobanteile des Pyrolysereststoffes, insbesondere aller Metallteile, von den feineren Grobanteilen, d.h. den brennbaren Bestandteilen, vor Einleitung in die Hochtemperatur-Brennkammer 8 wird dreierlei erreicht: Zum ersten liegen die ausgeschiedenen Grobanteile an dieser Stelle der Anlage in hygienisch einwandfreiem Zustand vor und eignen sich daher bestens für eine längere Zwischenlagerung und einen Weitertransport. Dabei ist der nicht aufoxidierte Zustand der Metalle für die Weiterverarbeitung besonders vorteilhaft. Zum zweiten wird so vermieden, daß übermäßig viele Metalloxide, insbesondere Schwermetalloxide, über die Hochtemperatur-Brennkammer 8 in das Rauchgas gelangen und damit die Rauchgasreinigungsanlage 13 besonders belasten. Zugleich können so in der Reststofftrennvorrichtung 22 Steine, Keramikteile und Glasscherben abgetrennt und dann problemlos deponiert werden. Dieses bringt es wiederum mit sich, daß die Aufwendungen für die Mahlvorrichtung 30 zur Zerkleinerung der feineren Grobanteile wesentlich geringer sind, als wenn diese vor dem Pyrolysereaktor 2 den gesamten Abfall berücksichtigen müßte. Zum dritten bringt die Vorabscheidung der Grobanteile auch mit sich, daß die in der Hochtemperatur-Brennkammer 8 anfallende Schlacke, die in dem Wasserbehälter 34c eines Naßentschlackers 34 granuliert und dort in glasigem Zustand anfällt, verhältnismäßig wenig Schwermetalle enthält. Weil diese wenigen Schwermetalle darüber hinaus in der Schlacke auslaugsicher umschlossen sind, kann diese Schlacke z.B. in der Baustoffindustrie problemlos eingesetzt werden.

Lediglich Schwermetalle, wie z.B. Quecksilber und Cadmium, die bereits bei der Pyrolysetemperatur verdampfen und überwiegend an den Pyrolysekoks angelagert werden, werden in der Hochtemperatur-Brennkammer 8 bei der Verbrennung des Feinstaubes verdampft und oxidiert. Diese Schwermetalloxide, z.B. Cadmium- und Zinkoxid, fallen überwiegend mit dem Flugstaub als Feststoffe in der Abhitzedampferzeugeranlage 11 und in der Staubfilteranlage 12 an, oder sie werden zu einem gewissen Anteil auch in der Rauchgasreinigungsanlage 13 abgeschieden, z.B. Quecksilberoxid. Durch die Flugstaubrückführung über die Ascherückführleitung 32 in die Hochtemperatur-Brennkammer 8 rezirkulieren diese Schwermetalle, bis sie schliesslich in der Schlacke eingebunden sind.

Der Stickoxid-Gehalt der Rauchgase kann bei dieser Anlage zur thermischen Müllentsorgung auf einem niedrigen Niveau gehalten werden. Dies ist bedingt durch die Zumischung von kühlem Rauchgas direkt in den Brenner 7 oder neben dem Brenner 7 in die Hochtemperatur-Brennkammer 8 (Rauchgasrezirkulation).

Die beschriebene Anlage zur thermischen Abfallentsorgung vermeidet die bei bekannten Pyrolyseanlagen bestehende Abhängigkeit von einem einzigen Abnehmer für das erzeugte Gas. Sie wandelt auch die thermische Energie des Abfalls in Dampfenergie um. Der Dampf kann z.B. über eine Wärmeschiene einem Verbraucher, im vorliegenden Fall vorzugsweise einem in der Anlage zur thermischen Abfallentsorgung integrierten Dampfkraftwerk 21, zum Zwecke der Erzeugung von elektrischer Energie zugeleitet werden.

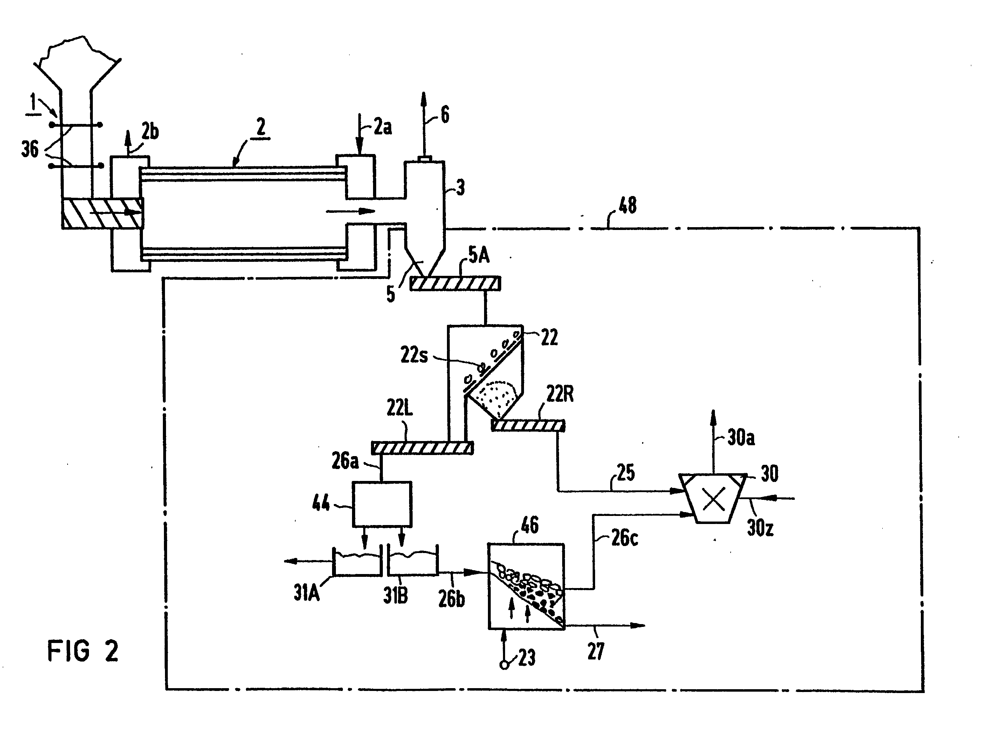

In Fig. 2 ist eine Ausführungsform gezeigt, die mehr technische Details aufweist als die Ausführungsform nach Fig. 1. Auch bei dieser Ausführungsform wird ungeschredderter Abfall in eine Aufgabeeinrichtung 1 mit einer Doppelschleuse 36 dosiert, die zu einem Pyrolysereaktor 2 führt. Dessen Heizgaszuführung und -abführung sind mit 2a bzw. 2b bezeichnet. Auftragsseitig ist auch hier wieder eine Austragsvorrichtung 3 angeschlossen, die eine Schwelgasleitung 6 mit Schwelgas- und Feinstaubabzug und einen Pyrolysereststoffausgang 5 aufweist. Der Pyrolysereststoff verläßt letzteren beispielsweise mit einer Temperatur von 400°C über eine gekühlte Austragsschnecke 5A. Von hier fällt der Pyrolysereststoff in eine Reststofftrennvorrichtung 22, die ein Sieb 22s aufweist und die zur Trennung nach Stückgröße vorgesehen ist. Am linken Ausgang werden die größeren Anteile mit einem Durchmesser von beispielsweise größer als 5 mm (Großanteile) und am rechten Ausgang die kleineren Anteile mit einem Durchmesser von weniger als 5 mm (Kleinanteile) abgegeben. Die Großanteile und die Kleinanteile fallen auf Austragsschnecken 22L bzw. 22R. Der von der Schnecke 22L gewonnene Großanteil, der auch noch brennbares Material enthält, wird über einen Pfad 26a einem Metallabschneider 44 zugeführt. Dieser trennt das Metall von den anderen Stoffen und sammelt es in einem

Behälter 31A. Von hier kann es als Schrott weiterverarbeitet werden. Die nicht-metallischen Großanteile (Steine, Glas, Keramik plus brennbare Anteile) werden in einem Behälter 31B gesammelt. Von hier gelangen sie über einen Transportpfad 26b zu einer weiteren Trenneinrichtung 46. Bei dieser Trenneinrichtung 46 kann es sich insbesondere um eine geschüttelte oder von unten angeblasene Schrägrutsche handeln. Die Trenneinrichtung 46 trennt die eingehenden Stoffe nach ihrem spezifischen Gewicht. Dies kann also beispielsweise mittels Windsichtung und/oder über den Schüttelrost geschehen. Die wenig oder nicht brennbaren Materialien, wie Steine, Glas- und Keramik-Scherben, die das größere spezifische Gewicht haben, werden über eine Leitung 27 abgegeben. Der brennbare Großanteil dagegen, der das kleinere spezifische Gewicht hat, wird über eine Leitung 26c einer Mahlvorrichtung 30 zugeführt. Diese wird auch von der Leitung 25 mit dem Kleinanteil (dieser enthält u.a. auch einen Feinststaubanteil) beaufschlagt. Die für den Betrieb der Mahlvorrichtung 30 erforderliche Gas- oder Luftzufuhr ist mit 30z bezeichnet. Über die Leitung 30a wird die zermahlene Substanz – wie in Fig. 1 – der Brennkammer 8 oder dem Zwischenbunker 29 zugeführt. sofern geschredderter Abfall aufgegeben wird, kann die Trenneinrichtung 46 wegfallen.

Die Trenn- und Aufbereitungsvorrichtung für den Pyrolysereststoff ist in Fig. 2 in einem gestrichelten Kasten eingezeichnet und allgemein mit 48 bezeichnet.

## Patentansprüche

1. Anlage zur thermischen Abfallentsorgung,
a) mit einem Pyrolysereaktor (2), der bei etwa 300 bis 600°C den Abfall in Schwelgas und Pyrolysereststoff umwandelt,
b) mit einer nachgeschalteten Austragsvorrichtung (3) für das Schwelgas und Pyrolysereststoff,
c) mit einer daran gasseitig angeschlossenen Brennkammer (8) für das Schwelgas und
d) mit einer Reststofftrennvorrichtung (22), dadurch gekennzeichnet, daß die Brennkammer (8) für mehr als 1200°C ausgelegt ist, bei Erhitzung auf ein vorgegebenes Temperaturniveau für die thermische Zerstörung der eingebrachten organischen Schadstoffe in den zugeführten Gasen sorgt und mit einem Abzug (34) für die Entnahme schmelzflüssiger, nach Abkühlung in verglaster Form vorliegender Schlacke versehen ist, und daß die Reststofftrennvorrichtung (22) den Pyrolysereststoff der Austragsvorrichtung (3) in Großanteile mit größerem und Kleinanteile mit kleinerem Durchmesser voneinander trennt und die Kleinanteile des Reststoffes über eine Mahlvorrichtung (30) der Brennkammer (8) zuführt, wobei die Großanteile gröbere Grobanteile und die Kleinanteile feinere Grobanteile und Feinanteile umfassen.
2. Anlage nach Anspruch 1, dadurch gekennzeichnet, daß eine Trenneinrichtung (46) zur Trennung nach spezifischem Gewicht vorgesehen ist, der die Großanteile zuführbar sind.
3. Anlage nach einem der Ansprüche 1 oder 2, dadurch gekennzeichnet, daß der Trenneinrichtung (46) eine Mahlvorrichtung (30) nachgeschaltet ist, der die Großanteile mit dem geringeren spezifischen Gewicht zuführbar sind.
4. Anlage zur thermischen Abfallentsorgung mit einem Pyrolysereaktor (2), der den Abfall bei etwa 300 bis 600°C in Schwelgas und im wesentlichen nicht-flüchtigen Pyrolysereststoff umformt, mit einer am Pyrolysereaktor (2) angeschlossenen Austragsvorrichtung (3) für den nicht-flüchtigen Pyrolysereststoff, die einen Schwelgasabzugsstutzen (4) zum Abführen von Schwelgas aufweist, und mit einer Brennkammer (8), der das Schwelgas zugeleitet ist, dadurch gekennzeichnet, daß an der Austragsvorrichtung (3) pyrolysereststoffseitig eine Reststofftrennvorrichtung (3, 22) zur Trennung der gröberen Grobanteile, die im wesentlichen nichtbrennbare Bestandteile wie Steine, Glasscherben, Porzellanreste, Metallteile umfassen, von feineren brennbaren Grobanteilen, die gegebenenfalls Feinanteile enthalten, angeordnet ist, daß eine Transporteinrichtung (26) für die feineren Grobanteile zu einer Mahlvorrichtung (30) führt, aus deren Austragsseite die gemahlenen feineren Grobanteile einer mit Sauerstoffüberschuß betriebenen Brennkammer (8) zuführbar sind, die die aus dem zugeführten Brennstoff erzeugten Verbrennungsgase ausreichend lange auf einem Temperaturniveau hält, so daß schmelzflüssige Schlacke entsteht, daß die Brennkammer (8) mit einem Abzug (34) versehen ist, aus dem die schmelzflüssige Schlacke entnehmbar ist, die nach Abkühlung in verglaster Form vorliegt, und daß in die von der Brennkammer (z.B. 8) zu einem Kamin (14) führende Rauchgasleitung (10) insbesondere eine Abhitzedampferzeugeranlage (11), eine Staubfilteranlage (12) und eine Rauchgasreinigungsanlage (13) eingebaut sind.
5. Anlage nach Anspruch 4, dadurch gekennzeichnet, daß in der Reststofftrennvorrichtung (3, 22) zunächst die Feinanteile und anschließend die feineren Grobanteile von den gröberen Grobanteilen durch Wegblasen mit einem Inertgas abgetrennt werden.
6. Anlage nach Anspruch 4 oder 5, dadurch gekennzeichnet, daß die Brennkammer (8) für Wandtemperaturen über 1200 °C ausgelegt ist und die zugeführten Gase auf dem besagten Temperaturniveau, das über 1200°C liegt, hält.
7. Anlage nach einem der Ansprüche 4 bis 6, dadurch gekennzeichnet, daß an die die Reststofftrennvorrichtung (3, 22) mit der Brennkammer (8) verbindende Leitung (25) ein Zwischenbunker (29) für die Zwischenspeicherung der Feinanteile und/oder der gemahlenen feinen Grobanteile angeschlossen ist.
8. Anlage nach einem der Ansprüche 4 bis 7, dadurch gekennzeichnet, daß eine Dosiervorrichtung (40) zur Regelung, insbesondere der Heizleistung der Abhitzedampferzeugeranlage (11), vorgesehen ist, über die die zwischengespeicherten Anteile des Reststoffes in die Brennkammer (z.B. 8) einspeisbar sind.

9. Anlage nach einem der Ansprüche 4 bis 8, dadurch gekennzeichnet, daß eine Rückführleitung (32) vorgesehen ist, die aus dem Rauchgas abgeschiedenen Flugstaub in die Brennkammer (8) zurückleitet.

10. Anlage nach einem der Ansprüche 4 bis 9, dadurch gekennzeichnet, daß ein erster Teil der Rauchgase an einer Stelle (18a) hinter der Abhitzedampferzeugeranlage (11) abziehbar und über eine Rauchgas-Rezirkulationsleitung (19) zur Temperaturregelung in die Brennkammer (8) zurückleitbar ist.

11. Anlage nach einem der Ansprüche 4 bis 10, dadurch gekennzeichnet, daß ein zweiter Teil der Rauchgase an einer Stelle (18a) hinter der Abhitzedampferzeugeranlage (11) abziehbar und über eine Zuleitung (19, 19z) zur Temperaturregelung in die Abhitzedampferzeugeranlage (11) zurückleitbar ist.

12. Anlage nach Anspruch 10 oder 11, dadurch gekennzeichnet, daß der zweite Teil der vergleichsweise kalten zurückgeleiteten Rauchgase derart eindüsbar ist, daß sich längs der Wände der Abhitzedampferzeugeranlage (11) ein vergleichsweise kühler Gasschleier bildet.

13. Anlage nach einem der Ansprüche 6 bis 12, dadurch gekennzeichnet, daß die Brennkammer (8) ungekühlt ist.

14. Anlage nach einem der Ansprüche 4 bis 13, dadurch gekennzeichnet, daß der Dampf aus der Abhitzedampferzeugeranlage (11) zur Fernwärmeerzeugung, zur Prozeßdampfversorgung oder aber auch in einem integrierten Dampfkraftwerk (21) zur Stromerzeugung herangezogen wird.

15. Anlage nach einem der Ansprüche 4 bis 14, dadurch gekennzeichnet, daß eine Aufgabeeinrichtung (1) vorgesehen ist, die den Abfall unzerkleinert in den Pyrolysereaktor (2) einleitet.

16. Anlage nach einem der Ansprüche 4 bis 15, dadurch gekennzeichnet, daß zum Granulieren der aus der Brennkammer (8) abgezogenen Schlacke ein Wasserbad (34C) vorgesehen ist.

17. Anlage nach einem der Ansprüche 13 bis 16, dadurch gekennzeichnet, daß die Brennkammer (8) mit einer Wärmeisolation (9), insbesondere in Form einer ungekühlten Ausmauerung, versehen ist.

18. Anlage nach einem der Ansprüche 4 bis 17, dadurch gekennzeichnet, daß eine Rückführleitung (32) vorgesehen ist, über die aus dem Rauchgas abgeschiedener, insbesondere mit Metalloxiden angereicherter Flugstaub in einen Container (33) abziehbar ist.

19. Verfahren zur thermischen Abfallentsorgung, dadurch gekennzeichnet, daß es die folgenden Schritte umfaßt:

a) der Abfall wird bei relativ niedriger Temperatur etwa 300 bis 600°C weitgehend unter Sauerstoffabschluß verschwelt, wobei sich ein Schwelgas und ein Pyrolyserestsstoff bilden,

b) der Pyrolyserestsstoff wird getrennt in einen Feinanteil, einen feineren Grobanteil und einen gröberen Grobanteil,

c) der Feinanteil wird verbrannt, der feinere Grobanteil wird nach Zerkleinerung – vorzugsweise zusammen mit dem Schwelgas – verbrannt, wobei sich Rauchgas und eine schmelzflüssige Schlacke bilden, und der gröbere Grobanteil wird abgeschieden.

20. Verfahren nach Anspruch 19, dadurch gekennzeichnet, daß aus dem Rauchgas Staub abgeschieden wird und daß der Staub in die Schlacke eingeschmolzen wird.

21. Verfahren nach Anspruch 19 oder 20, dadurch gekennzeichnet, daß die thermische Energie des Rauchgases zur Erwärmung des zugeführten Sauerstoffes und/oder zur Dampferzeugung ausgenutzt wird.

22. Verfahren nach einem der Ansprüche 19 bis 21, dadurch gekennzeichnet, daß zur Temperaturregelung gereinigtes Rauchgas dem verbrennenden Schwelgas beigemischt wird.

23. Verfahren nach einem der Ansprüche 19 bis 22, dadurch gekennzeichnet, daß der Feinanteil und/oder der feinere Grobanteil vor dem Verbrennen zwischengelagert wird.

24. Verfahren nach einem der Ansprüche 19 bis 23, dadurch gekennzeichnet, daß aus dem Rauchgas mit Schwermetalloxiden angereicherter Flugstaub abgeschieden und als Rohstoff für ein Recycling der Schwermetalloxide verwendet wird.

25. Verfahren nach einem der Ansprüche 19 bis 24, dadurch gekennzeichnet, daß die schmelzflüssige Schlacke zu Bauzwecken verwendet wird.

**Claims**

1. A plant for thermal waste disposal,
a) having a pyrolysis reactor (2) which converts the waste into carbonisation gas and pyrolysis residue at approximately 300 to 600°C,
b) having a discharge device (3) for the carbonisation gas and the pyrolysis residue arranged thereafter,
c) having a combustion chamber (8) for the carbonisation gas connected thereto on the gas side, and
d) having a residue sorting device (22), characterised in that the combustion chamber (8) is designed to withstand more than 1200°C and when heated to a predetermined temperature level effects thermal destruction of the organic harmful substances introduced into the added gases, and is provided with an outlet (34) for the removal of molten slag present in vitrified form after cooling, and
that the residue sorting device (22) sorts the pyrolysis residue from the discharge device (3) into large components of relatively large diameter and small components of relatively small diameter and feeds the small components of the residue via a grinding apparatus (30) to the combustion chamber (8), the large components comprising coarse components and the small components comprising finer coarse components and fine components.

2. A plant according to claim 1, characterised in that a sorting device (46) for sorting by specific gravitiy is provided, to which the large components can be fed.

3. A plant according to claim 1 or claim 2, characterised in that the sorting device (46) has a grinding apparatus (30) arranged after it to which the large components having the lower specific gravity can be fed.

4. A plant for thermal waste disposal having a pyrolysis reactor (2) which converts the waste at about 300 to 600°C into carbonisation gas and substantially non-volatile pyrolysis residue, having a discharge device (3) for the non-volatile pyrolysis residue connected to the pyrolysis reactor (2) which has a carbonisation gas discharge fitting (4) for the removal of carbonisation gas, and having a combustion chamber (8) to which the carbonisation gas is supplied, characterised in that arranged on the discharge device (3) on the pyrolysis residue side is a residue sorting device (3, 22) for sorting out the coarser coarse components essentially comprising non-combustible components such as stones, glass shards, broken china and metal parts from finer combustible coarse components which may include fine components, a transport device (26) for transporting the finer coarse components to a grinding apparatus (30) from the discharge side of which the ground finer coarse components can be fed to a combustion chamber (8) operated with an excess of oxygen which maintains the combustion gases produced from the delivered combustible material for a sufficiently long time at a temperature level to produce molten slag, the combustion chamber (8) has an outlet (34) through which the molten slag can be removed which after cooling is in a vitrified form, and leading from the combustion chamber (e.g. 8) to a stack (14) is a flue gas line (10) in which, in particular, a waste heat steam generator system (11), a dust filtration system (12) and a flue gas scrubbing system (13) are installed.

5. A plant according to claim 4, characterised in that in the residue sorting device (3, 22) first separates the fine components, and then the finer coarse components are separated from the coarser coarse components by blowing away with an inert gas.

6. A plant according to claim 4 or claim 5, characterised in that the combustion chamber (8) is designed to withstand wall temperatures exceeding 1200°C and maintains supplied gases at the said temperature level, above 1200°C.

7. A plant according to any one of claims 4 to 6, characterised in that connected to the line (25) connecting the residue sorting device (3, 22) to the combustion chamber (8) is an intermediate bin (29) for the temporary storage of the fine components and/or the ground fine coarse components.

8. A plant according to any one of claims 4 to 7, characterised in that a metering device (40) for regulating in particular the heat output of the waste heat steam generator system (11) is provided, by way of which the temporarily stored components of the residue can be fed into the combustion chamber (8).

9. A plant according to any one of claims 4 to 8, characterised in that a return line (32) is provided which returns flue dust precipitated from the flue gas to the combustion chamber (8).

10. A plant according to any one of claims 4 to 9, characterised in that a first portion of the flue gases can be removed at a point (18a) after the waste heat steam generator system (11) and returned to the combustion chamber (8) by way of a flue gas recirculation line (19) for temperature regulation.

11. A plant according to any one of claims 4 to 10, characterised in that a second portion of the flue gases can be removed at a point (18a) after the waste heat steam generator system (11) and can be returned to the waste heat steam generator system (11) via a line (19, 19z) for temperature regulation.

12. A plant according to claim 10 or claim 11, characterised in that the second portion of the comparatively cold returned flue gases can be injected so that a comparatively cool gas mist forms along the walls of the waste heat steam generator system (11).

13. A plant according to any one of claims 6 to 12, characterised in that the combustion chamber (8) is not cooled.

14. A plant according to any one of claims 4 to 13, characterised in that the steam from the waste heat steam generator system (11) is used for long-distance heat production, for producing process steam or else for generating power in an integrated steam power station (21).

15. A plant according to any one of claims 4 to 14, characterised in that a feed device (1) is provided which introduces the waste into the pyrolysis reactor (2) without comminution.

16. A plant according to any one of claims 4 to 15, characterised in that a water bath (34C) is provided for granulating the slag removed from the combustion chamber (8).

17. A plant according to any one of claims 13 to 16, characterised in that the combustion chamber (8) is provided with heat insulation (9), in particular in the form of an uncooled brick lining.

18. A plant according to any one of claims 4 to 17, characterised in that a return line (32) is provided by way of which the flue dust, enriched in particular with metal oxides, can be removed from the flue gas into a container (33).

19. A method for thermal waste disposal, characterised by the following steps:
    a) the waste is carbonised at a relatively low temperature (about 300 to 600°C) substantially in the absence of oxygen to form carbonisation gas and pyrolysis residue,
    b) the pyrolysis residue is sorted into a fine component, a finer coarser component and a coarser coarse component,
    c) the fine component is burned, the finer coarse component, after being comminuted – preferably together with the carbonisation gas – is burned to form flue gas and molten slag, and the coarser coarse component is separated.

20. A method according to claim 19, characterised in that dust is separated from the flue gas and the dust is melted into the slag.

21. A method according to claim 19 or claim 20, characterised in that the thermal energy from the flue gas is used for heating the oxygen supplied and/or for generating steam.

22. A method according to any one of claims 19 to 21, characterised in that scrubbed flue gas is admixed with the burning carbonisation gas for temperature regulation.

23. A method according to any one of claims 19 to 22, characterised in that the fine component and/or the finer coarse component is stored temporarily before combustion.

24. A method according to any one of claims 19 to 23, characterised in that flue dust enriched with heavy metal oxides is separated from the flue gas and used as raw material for recycling the heavy metal oxides.

25. A method according to any one of claims 19 to 24, characterised in that the molten slag is used for construction purposes.

**Revendications**

1. Installation d'élimination thermique de déchets, comprenant,
a) un réacteur de pyrolyse (2), qui transforme les déchets en gaz de distillation lente et en résidu de pyrolyse entre 300 et 600°C environ,
b) un dispositif (3) en aval de déchargement du gaz de distillation lente et du résidu de pyrolyse,
c) une chambre de combustion (8) du gaz de distillation lente qui y est raccordée du côté gaz, et
d) un dispositif de séparation du résidu (22), caractérisée en ce que la chambre de combustion (8) est conçue pour fonctionner à une température supérieure à 1200°C, sert, lors du chauffage à un niveau de température prescrit, à la destruction thermique des substances organiques nocives introduites dans les gaz amenés, et est munie d'une évacuation (34) destinée au prélèvement de la scorie fondue, se présentant après refroidissement sous une forme vitrifiée, et en ce que le dispositif de séparation du résidu (22) sépare le résidu de pyrolyse du dispositif de déchargement (3), en des parties de grande dimension ayant un grand diamètre et en des parties de petite dimension ayant un petit diamètre, et les parties de petite dimension du résidu sont envoyées à la chambre de combustion (8) par un dispositif de broyage, les parties de grande dimension comportant des parties grossières plus grossières, et les parties de petite dimension comportant des parties grossières plus fines et des parties fines.

2. Installation suivant la revendication 1, caractérisée en ce qu'il est prévu un dispositif de séparation (46) de séparation en fonction de la masse volumique auquel les parties de grande dimension peuvent être amenées.

3. Installation suivant l'une des revendications 1 ou 2, caractérisée en ce que, en aval du dispositif de séparation (46), est monté un dispositif de broyage (30), auquel peuvent être envoyées les parties de grande dimension ayant la plus petite masse volumique.

4. Installation d'élimination thermique des déchets, comprenant un réacteur de pyrolyse (2), qui transforme les déchets entre 300 et 600°C environ en gaz de distillation lente et en résidu de pyrolyse sensiblement non volatils, comprenant un dispositif de déchargement (3) du résidu de pyrolyse non volatil, raccordé au réacteur de pyrolyse (2) et comportant un conduit d'évacuation (4) du gaz de distillation lente destiné à évacuer le gaz de distillation lente, et une chambre de combustion (8) à laquelle le gaz de distillation lente est envoyé, caractérisée en ce que sur le dispositif de déchargement (3) est prévu, du côté résidu de pyrolyse, un dispositif de séparation de résidu (3, 22) destiné à séparer les parties grossières les plus grossières qui comprennent essentiellement des constituants non combustibles, comme des pierres, des éclats de verre, des résidus de porcelaine, de parties métalliques, des parties grossières combustibles plus fines qui contiennent éventuellement des parties fines, en ce qu'un dispositif de transport (26) des parties grossières les plus fines mène à un dispositif de broyage (30), à partir du côté de sortie duquel les parties grossières broyées les plus fines peuvent être envoyées à une chambre de combustion (8) fonctionnant avec un excès d'oxygène et maintenant les gaz de combustion, produits à partir du combustible amené à un niveau de température pendant suffisamment longtemps pour former une scorie fondue, en ce que la chambre de combustion (8) est munie d'une évacuation (34) par laquelle la scorie fondue qui, après refroidissment, se présente sous forme vitrifiée, peut être prélevée, et en ce que, dans le conduit pour le gaz de fumée (10) menant de la chambre de combustion (par exemple 8) à une cheminée (14) sont montées notamment une installation de production de vapeur avec récupération de la chaleur perdue (11), une installation de filtration de la poussière (12) et une installation d'épuration des gaz de fumée (13).

5. Installation suivant la revendication 4, caractérisée en ce que, dans le dispositif de séparation du résidu (3, 22), d'abord les parties fines et ensuite les parties grossières les plus fines sont séparées des parties grossières les plus grossières par entraînement par un gaz inerte.

6. Installation suivant la revendication 4 ou 5, caractérisée en ce que la chambre de combustion (8) est conçue pour des températures de paroi supérieures à 1200°C et les gaz amenés la maintiennent audit niveau de température qui est supérieure à 1200°C.

7. Installation suivant l'une des revendications 4 à 6, caractérisée en ce qu'au conduit (25) mettant le dispositif de séparation du résidu (3, 22) en communication avec la chambre de combustion (8), est raccordée une soute intermédiaire (29) destinée au stockage intermédiaire des parties fines et/ou des parties grossières broyées, les plus fines.

8. Installation suivant l'une des revendications 4 à 7, caractérisée en ce qu'il est prévu un dispositif de dosage (40) pour régler notamment la puissance calorifique de l'installation de générateur de vapeur avec récupération de la chaleur perdue (11), par lequel les parties du résidu stockées intermédiairement peuvent être envoyées dans la chambre de combustion (8).

9. Installation suivant l'une des revendications 4 à 8, caractérisée en ce qu'il est prévu un conduit de recyclage (32), qui renvoie à la chambre de combustion (8) la poussière volante séparée du gaz de fumée.

10. Installation suivant l'une des revendications 4 à 9, caractérisée en ce qu'une première partie des gaz de fumée peut être soutirée en un emplacement (18a), en aval de l'installation de génération de vapeur, par récupération de la chaleur perdue (11) et peut être recyclée dans la chambre de combustion (8), pour régler la température, par l'intermédiaire d'un conduit de recirculation du gaz de fumée (19).

11. Installation suivant l'une des revendications 4 à 10, caractérisée en ce qu'une seconde partie des gaz de fumée peut être soutirée en un emplacement (18a) en aval de l'installation de génération de vapeur par récupération de la chaleur perdue (11) et peut être retournée, par un conduit d'amenée (19, 19z), en vue de régler la température, à l'installation de génération de vapeur par récupération de la chaleur perdue (11).

12. Installation suivant la revendication 10 ou 11, caractérisée en ce que la seconde partie des gaz de fumée recyclés relativement froids peut être introduite par projection, de manière à former le long des parois de l'installation de génération de vapeur par récupération de la chaleur perdue (11) une voile de gaz relativement frais.

13. Installation suivant l'une des revendications 6 à 12, caractérisée en ce que la chambre de combustion (8) n'est pas refroidie.

14. Installation suivant l'une des revendications 4 à 13, caractérisée en ce que la vapeur provenant de l'installation de génération de vapeur par récupération de la chaleur perdue (11) est utilisée pour la production de chaleur au loin, pour l'alimentation en vapeur du processus, ou dans une centrale à vapeur (21) intégrée pour la production de courant électrique.

15. Installation suivant l'une des revendications 4 à 14, caractérisée en ce qu'il est prévu un dispositif de chargement (1) qui introduit les déchets non fragmentés dans le réacteur de pyrolyse (2).

16. Installation suivant l'une des revendications 4 à 15, caractérisée en ce qu'il est prévu un bain d'eau (34C) pour la granulation des scories soutirées de la chambre de combustion (8).

17. Installation suivant l'une des revendications 13 à 16, caractérisée en ce que la chambre de combustion (8) est munie d'une isolation thermique (9) notamment sous la forme d'une maçonnerie non refroidie.

18. Installation suivant l'une des revendications 4 à 17, caractérisée en ce qu'il est prévu un conduit de recyclage (32), par lequel la poussière volante, séparée du gaz de fumée et notamment enrichie en oxydes métalliques, peut être soutirée dans un conteneur (33).

19. Procédé d'élimination thermique des déchets, caractérisée en ce qu'il comprend les stades suivants:

a) on fait subir aux déchets une distillation lente, à une température relativement basse comprise entre 300 et 600°C environ, sensiblement à l'abri de l'oxygène, ce qui forme un gaz de distillation lente et un résidu de pyrolyse,

b) on sépare le résidu de pyrolyse en une partie fine, en une partie grossière plus fine et en une partie grossière plus grossière,

c) on brûle la partie fine, on brûle la partie grossière la plus fine, après fragmentation, de préférence en même temps que le gaz de distillation lente, en formant du gaz de fumée et une scorie fondue, et on sépare la partie grossière la plus grossière.

20. Procédé suivant la revendication 19, caractérisé en ce qu'il consiste à séparer la poussière du gaz de fumée et à introduire la poussière dans la scorie par fusion.

21. Procédé suivant la revendication 19 ou 20, caractérisé en ce qu'il consiste à utiliser l'énergie thermique du gaz de fumée pour chauffer l'oxygène amené et/ou pour produire de la vapeur.

22. Procédé suivant l'une des revendications 19 à 21, caractérisé en ce qu'il consiste à mélanger du gaz de fumée épuré au gaz de distillation lente en combustion, pour régler la température.

23. Procédé suivant l'une des revendications 19 à 22, caractérisé en ce qu'il consiste à stocker intermédiairement la partie fine et/ou la partie grossière la plus fine, avant la combustion.

24. Procédé suivant l'une des revendications 19 à 23, caractérisé en ce qu'il consiste à séparer du gaz de fumée la poussière volante enrichie en oxydes de métaux lourds et à l'utiliser comme matière première pour un recyclage des oxydes de métaux lourds.

25. Procédé suivant l'une des revendications 19 à 24, caractérisé en ce qu'il consiste à utiliser la scorie fondue à des fins de construction.

FIG 1

FIG 2